# EUROPEAN PATENT APPLICATION

(11) **EP 4 641 974 A1**
(43) Date of publication of application: **29.10.2025**
(21) Application number: 23800725.6
(22) Date of filing: 18.05.2023
(51) Int. Cl.: H04L 9/40

(54) **DATA PROCESSING METHOD, DEVICE, AND READABLE STORAGE MEDIUM**

(30) Priority: 23.12.2022 CN 202221166815 U
(71) Applicant: Wangsu Science & Technology Co., Ltd., Shanghai 200030 (CN)
(72) Inventor: Wang, Wanfeng, Xiamen, Fujian 361003 (CN); Lv, Shiubiao, Xiamen, Fujian 361003 (CN)
(74) Representative: Balder IP Law, S.L.
(86) International application number: PCT/CN2023/095120
(87) International publication number: WO 2024/130949

(57) **Abstract**

Embodiments of the present disclosure provide a data processing method, a device, and a readable storage medium. The electronic device acquires a network data packet from a first process of an application, determines a first path or a second path as a target path according to a target network address of the network data packet, and determines an access permission for the target resource corresponding to the target network address. Therefore, the network data packet is processed according to the target path and the access permission. **In** the above technical solutions, the electronic device diverts traffic according to the target network address of the network data packet, and there is no need to modify an IP header of the network data packet. **In** this way, decoupling between the secure tunnel and the sandbox network protection isolation is implemented while network security is ensured.

## Description

### CROSS-REFERENCE TO RELATED APPLICATIONS

This application is based upon and claims priority to Chinese Patent Application No. 202211668150.0, filed on December 23, 2022, the entire contents of which are incorporated herein by reference.

### TECHNICAL FIELD

Embodiments of the present disclosure relate to the field of network security technologies, and in particular, to a data processing method, a device, and a readable storage medium.

### BACKGROUND

With rapid developments of Internet technologies, some security issues such as enterprise data leakage and the like may be caused while great convenience is created.

To avoid enterprise data leakage, computers are generally partitioned into security domains and personal domains using the virtual isolation technology. Users may surf the Internet in the personal domain, and work in the security domain. The network is an important data communication channel in the security domain, and thus, network protection on the security domain is critical to enterprise data leakage prevention. At present, generally adopting application programming interface (API) hooks to secure the security domain.

However, the protection scheme by adopting the API hook may easily result in some processes not being protected. Therefore, when the user accesses an authorized network resource in the security domain, the processes may leak important data. Consequently, the protection effect and the security are not good.

### SUMMARY

Embodiments of the present disclosure provide a data processing method, a device, and a readable storage medium. Traffic is diverted according to a target network address of a network data packet, with no need of modifying an IP header of the network data packet. In this way, decoupling between a secure tunnel and sandbox network protection isolation is implemented while network security is ensured.

**In a** first aspect, embodiments of the present disclosure provide a data processing method. The method includes: acquiring a network data packet from a first process; determining a first path or a second path as a target path according to a target network address of the network data packet, where the first path is a path passing through a physical network interface card, and the second path is directed to a predetermined secure tunnel; determining an access permission for a target resource corresponding to the target network address; and processing the network data packet according to the target path and the access permission.

**In** a second aspect, embodiments of the present disclosure provide a data processing apparatus. The apparatus includes: an acquiring module configured to acquire a network data packet from a first process; a determining module configured to determine a first path or a second path as a target path according to a target network address of the network data packet, where the first path is a path passing through a physical network interface card, and the second path is directed to a predetermined secure tunnel; a permission module configured to determine an access permission to a target resource corresponding to the target network address; and a processing module configured to process the network data packet according to the target path and the access permission.

In a third aspect, the embodiments of the present disclosure provide an electronic device. The electronic device includes: a processor, a memory, and one or more computer programs that are stored in the memory and executable on the processor. The one or more computer programs, when loaded and executed by the processor, cause the electronic device to perform the method as defined in the first aspect or various possible implementations of the first aspect.

In a fourth aspect, the embodiments of the present disclosure further provide a non-transitory computer-readable storage medium. The computer-readable storage medium stores one or more computer instructions. The one or more computer instructions, when loaded and executed by a processor, cause the processor to perform the method as described in the first aspect or various possible implementations of the first aspect.

In a fifth aspect, the embodiments of the present disclosure further provide a computer program product including one or more computer programs. The one or more computer programs, when loaded and executed by a processor, cause the processor to perform the method as described in the first aspect or various possible implementations of the first aspect.

According to the data processing method, the device, and the readable storage medium in the embodiments of the present disclosure, the electronic device acquires a network data packet from a first process of an application, determines a first path or a second path as a target path according to a target network address of the network data packet, and determines an access permission of the target resource corresponding to the target network address. Thereafter, the network data packet is processed according to the target path and the access permission. In the above technical solutions, the electronic device diverts traffic according to the target network address of the network data packet, with no need of modifying an IP header of the network data packet. In this way, decoupling between the secure tunnel and sandbox network protection isolation is implemented while network security is ensured.

### BRIEF DESCRIPTION OF THE DRAWINGS

For clearer descriptions of technical solutions according to the embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a schematic desktop diagram of an electronic device involved in a data processing method according to some embodiments of the present disclosure;
FIG. 2 is a schematic structural diagram of a sandbox involved in the data processing method according to some embodiments of the present disclosure;
FIG. 3 is a flow chart of the data processing method according to some embodiments of the present disclosure;
FIG. 4 is a schematic diagram of a first path and a second path in the data processing method according to some embodiments of the present disclosure;
FIG. 5 is another flow chart of the data processing method according to some embodiments of the present disclosure;
FIG. 6 is a schematic diagram of communication between processes involved in the data processing method according to some embodiments of the present disclosure;
FIG. 7 is a schematic diagram of a data processing apparatus according to some embodiments of the present disclosure; and
FIG. 8 is a schematic structural diagram of an electronic device according to some embodiments of the present disclosure.

### DETAILED DESCRIPTION

For clearer descriptions of the objectives, technical solutions, and advantages of the present disclosure, embodiments of the present disclosure are described hereinafter in detail with reference to the accompanying drawings.

Enterprise data leakage prevention plays an important role in ensuring network security. Traditional enterprise data leakage prevention schemes mainly include a file transparent encryption and decryption scheme, a pre-event interception and detection scheme, a mid-event protection scheme, a post-event audit scheme, a virtual cloud scheme, and the like. The file transparent encryption and decryption scheme may cause some stability-related risks, such as file damage, complex policy configuration, poor compatibility, and other issues, thereby affecting office efficiency. The pre-event interception and detection scheme and the mid-event protection scheme make users feel level-by-level interceptions, which results in poor experience and low efficiency in the office process. For some core data that has been leaked, although adopting the post-event audit scheme can trace back to the source of leakage, remedy seems meaningless. A virtual cloud desktop generally requires investments on hardware and network devices, resulting in high costs.

In view of those problems, based on the concept of zero trust, the virtual isolation control technology is generally adopted in industry to partition a computer into a security domain and a personal domain, so as to avoid data leakage from the pre-event source. For the security domain or the personal domain, especially the security domain, since network is an important data communication channel, network security is most significant to enterprise data security. At present, network protection is carried out by adopting API hook. However, the API hook fails to hook some system processes, which may cause miss or skipping of the system processes, thus leading to risks of data leakage.

In addition, current network protection schemes do not have good protection effects on domain name system (DNS) traffic, which may cause DNS to be attacked, i.e., important data may be leaked using DNS requests, and thus the network protection effect is not good.

Therefore, embodiments of the present disclosure provide a data processing method, a device, and a readable storage medium. Traffic is diverted according to a target network address of a network data packet, so that there is no need to modify an Internet protocol (IP) header of the network data packet. Therefore, decoupling between a secure tunnel and sandbox network protection isolation is implemented while network security is ensured.

The data processing method in embodiments of the present disclosure is performed by an electronic device, and an operating system of the electrode device is, for example, windows^{®}. A plurality of application programs, hereinafter referred to as programs, are installed on the electronic device. The programs include system programs and application programs of the electronic device. The system program is, for example, a program that comes with the electronic device when delivery from factory, such as a video player or the like. The application program is a program that is installed by a user on his/her own electronic device, such as an office software, an instant-response message software, or the like. The electronic device may be a desktop computer, a notebook computer, a tablet computer, an endpoint data leakage prevention (EDLP) terminal, a zero-trust-architecture (ZTNA) terminal, or the like, which is not limited in embodiments of the present disclosure.

In embodiments of the present disclosure, the electronic device is partitioned into a security domain and a personal domain using the virtual isolation control technology. The virtual isolation control technology is also referred to as a sandbox technology. The electronic device isolates processes in the security domain from processes in the personal domain based on the sandbox technology. The personal domain is also referred to as a non-security domain.

For example, a display of the electronic device has at least two desktops, and the electronic device can be switched from one desktop to the other desktop. One desktop is a desktop of the security domain. If an application program is launched on the desktop of the security domain, a process created by the electronic device can be called a security process. The other desktop is a desktop of the personal domain, and if an application program is launched on the desktop of the personal domain, a process created by the electronic device is called a non-security process. The non-security process is also called a personal-domain process.

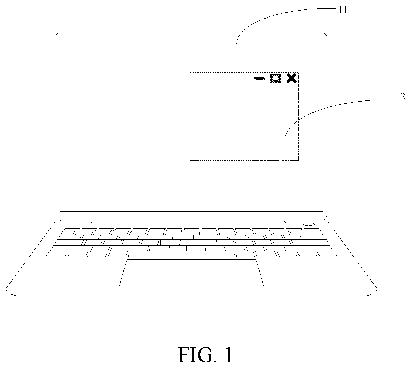

For another example, the electronic device displays the desktop of the personal domain on the display, and a floating window on the desktop represents the desktop of the security domain. FIG. 1 is a schematic diagram of a desktop of an electronic device involved in a data processing method according to some embodiments of the present disclosure. Referring to FIG. 1, a desktop 11 is a desktop of a personal domain, a floating window on the desktop 11 represents a desktop 12, and the desktop 12 is a desktop of a security domain. The desktop 12 can be zoomed in, zoomed out, or hidden by operating a mouse or the like. There is no restriction on the number of desktops 12. That is, by adopting the virtual isolation technology, a personal domain and a plurality of security domains can be defined on the electronic device, and different security domains correspond to different permissions. For example, the user is allowed to surf Internet in the personal domain, to access a first security resource in one of the plurality of security domains, and to access a second security resource in another of the plurality of security domains.

The security domain is a secure container, and the access permission for a security process is limited to a minimum range using the virtual isolation technology. Generally, the security process is allowed to write data to the security domain, and the security process is not allowed to write data to the personal domain. When the security process needs to write data to the personal domain, the security process is redirected to a secure disk corresponding to the security domain. The security process is allowed to read the data in the personal domain, and the security process is prohibited from communicating with the process in the personal domain. The secure disk may be stored through encryption, and the non-security process fails to read data from the secure disk or write data to the secure disk. By adopting a series of isolation technologies, the security domain becomes a closed environment. In principle, data is in an "only-in-no-out" state, and the data is only allowed to be transmitted and received over authorized and secure network resources.

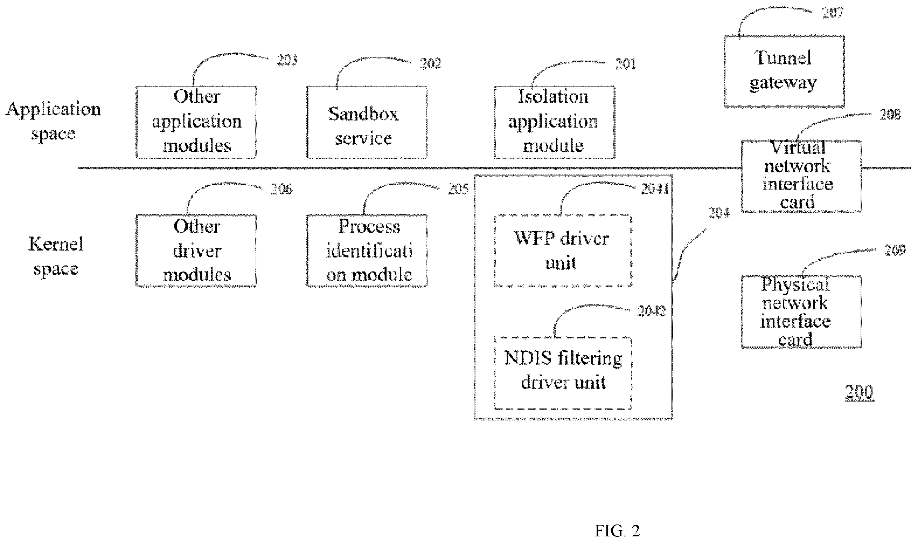

FIG. 2 is a schematic structural diagram of a sandbox involved in the data processing method according to some embodiments of the present disclosure. Referring to FIG. 2, in the embodiments of the present disclosure, a sandbox 200 includes an isolation application module 201, a sandbox service 202, and other application modules 203 that are in an application space. The sandbox 200 further includes an isolation driver module 204, a process identification module 205, and other driver modules 206 in a kernel space. The isolation driver module 204 includes a Windows^{®} filtering platform (WFP) driver unit 2041 and a network driver interface specification (NDIS) filtering driver unit 2042. FIG. 2 also illustrates a tunnel gateway 207, a virtual network interface card 208, and a physical network interface card 209 that are related to the sandbox.

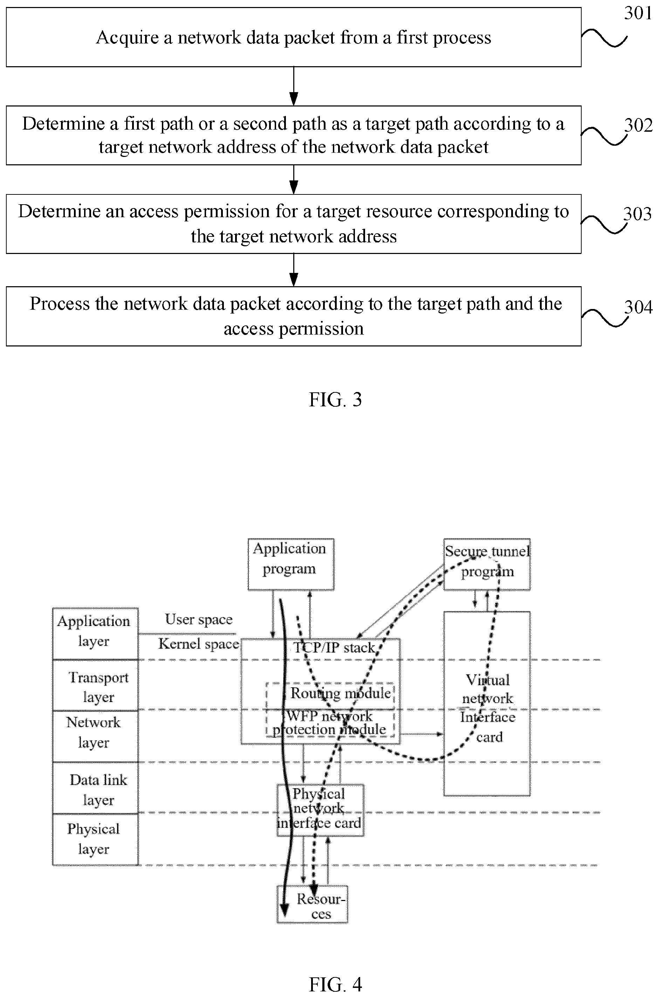

FIG. 3 is a flow chart of a data processing method according to some embodiments of the present disclosure. The method is performed by an electronic device. The method includes the following steps.

At block 301, a network data packet from a first process is acquired.

In some embodiments, an application program is selected by an user on a desktop of a personal domain or a desktop of a security domain, and then is launched through a double-click operation or the like. Each time an application program is launched, the system creates a corresponding process. If the application program is launched in the personal domain, a process created by the system is referred to as a non-security process. If an application program is launched in the security domain, a process created by the system is referred to as a security process. In addition, in some situations, some application programs may be launched form another application program. For example, an office application program is launched from a browser, and accordingly, the system also creates a new progress.

In some embodiments, after a first process (a security process or a personal process) is created, when the first process transmits a network data packet in an application layer, a transmission control protocol/Internet protocol (TCP/IP) stack of the electronic device acquires the network data packet. The network data packet at least carries a domain name of a target resource.

At block 302, a target path is determined from a first path and a second path according to a target network address of the network data packet.

The first path is a path passing through a physical network interface card, and the second path is a path pointing to a predetermined secure tunnel.

In some embodiments, a correspondence relationship between network addresses and target paths of resources is pre-stored in the electronic device. For example, in the electronic device, the first path is predetermined as a target path of resource A, and the second path is predetermined as a target path of resource B.

In some embodiments, upon acquiring the network data packet, the electronic device determines the target network address according to the domain name carried in the network data packet. For example, the electronic device transmits a domain name system (DNS) request carrying the domain name to the DNS, such that the DNS returns the target network address. Upon determining the target network address, the electronic device determines the first path or the second path as the target path by querying the correspondence relationship between the network addresses and the target paths of the resources.

FIG. 4 is a schematic diagram of a first path and a second path in the data processing method according to some embodiments of the present disclosure. Referring to FIG. 4, a TCP/IP model includes a five-layer architecture, including an application layer, a transport layer, a network layer, a data link layer, and a physical layer from top to bottom. Upon launch of an application program, the electronic device creates a first process, and the first process transmits a network data packet to the TCP/IP stack. The TCP/IP stack includes a routing module and a WFP network protection module. The electronic device pre-creates an independent secure tunnel. The secure tunnel is also referred to as a network tunnel.

In FIG. 4, resources include: resources that are only allowed to be accessed by security processes, resources that are only allowed to be accessed by non-security processes, and resources that can be accessed by both the security processes and the non-security processes.

When the network data packet arrives at the routing module, the routing module determines the first path or the second path as the target path according to the target network address of the network data packet. The first path is the path including the physical network interface card, as illustrated by the bold black solid line in FIG. 4. The second path is directed to a predetermined secure tunnel, as illustrated by the bold black dashed line in FIG. 4.

Referring to FIG. 4, when the target path is the first path, the TCP/IP stack transmits the network data packet to the physical network interface card, and the network data packet is transmitted through the physical network interface card. When the target path is the second path, the TCP/IP stack transmits the network data packet to the virtual network interface card, and then the network data packet is transmitted to the application layer. A secure tunnel program in the application layer reads out the data packet from the virtual network interface card, and transmits the read data packet to the TCP/IP stack, such that the TCP/IP stack recombines the data packet, and transmits a recombined data packet through the physical network interface card.

In FIG. 4, following callout interfaces need to be configured for protection in aspects of the security domain and the personal domain using WFP:
callout 1, FWPM_LAYER_ALE_AUTH_CONNECT_V4/6;
callout 2, FWPM_LAYER_ALE_AUTH_RECV_ACCEPT_V4/6;
callout 3, FWPM_LAYER ALE_RESOURCE_ASSIGNMENT_V4/6;
callout 4, FWPM_LAYER_ALE_RESOURCE_RELEASE_V4/6;
callout 5, FWPM _LAYER_DATAGRAM_DATA_V4/6.

Whether to register these callout interfaces may be automatically enumerated using tools or may be enumerated using a driver, or determined by analyzing corresponding sys driver files (inverse analysis) using a static analysis approach.

In the above callout interfaces, callout1 is responsible for outbound connect events, callout2 is responsible for inbound connect events, callout3 is responsible for port assignment event, callout4 is responsible for port release event, and callout5 is responsible for obtaining user datagram protocol (UDP) transport layer packet data streams to parse a relationship between domain names and IP addresses in the DNS.

At block 303, an access permission for a target resource corresponding to the target network address is determined.

In some embodiments, a correspondence relationship between resources and access permissions is pre-stored in the electronic device. For example, the electronic device pre-stores a list of access permissions. The list of access permissions indicates that resource A is only allowed to be accessed by the security processes, resource B is only allowed to be accessed by the non-security processes, and resource C is allowed to be accessed by both the security process and the non-security process. Therefore, the electronic device can determine the access permission for the target resource by querying the list of access permissions.

At block 304, the network data packet is processed according to the target path and the access permission.

In some embodiments, when the access permission indicates that the first process is allowed to access the target resource, the electronic device transmits the network data packet from the first process over the first path. In some embodiments, when the access permission indicates that the first process is not allowed to access the target resource, the electronic device discards the network data packet from the first process.

In some embodiments, not all network data packets from the security processes are transmitted over the second path, and not all network data packets from the non-security processes are transmitted over the first path. Transmission of the network data packets is dependent on the target path determined in operations at 302. In addition, in some embodiments, the target resource includes the resource that is only allowed to be accessed by the security process, the resource that is only allowed to be accessed by the non-security process, and the resource that can be accessed by both the security process and the non-security process. Therefore, decoupling between the secure tunnel and the sandbox protection isolation is implemented.

For example, when the target path is the first path, if the first process is a security process and the target resource is allowed to be accessed by both a security process and a non-security process, the TCP/IP stack transmits the network data packet from the first process through the physical network interface card. In this case, the target resource is, for example, a read-only resource or the like. Apparently, in this case, the network data packet from the security process is not transmitted over the secure tunnel, that is, not transmitted over the second path.

Still for example, when the target path is the second path, if the second process is a non-security process and the target resource is allowed to be accessed by both the security process and the non-security process, the TCP/IP stack transmits the network data packet from the first process through the virtual network interface card, that is, the network data packet from the first process is transmitted over the second path. In this case, the target resource is, for example, a read-only resource or the like. Apparently, in this case, the network data packet of the non-security process is not transmitted over the physical network interface card, but is transmitted over the second path.

**In** the data processing method according to the embodiments of the present disclosure, the electronic device acquires the network data packet from the first process of the application program, determines the first path or the second path as the target path according to the target network address of the network data packet, and determines an access permission for the target resource corresponding to the target network address. Thereafter, the network data packet is processed according to the target path and the access permission. In the above technical solutions, the electronic device diverts traffic according to the target network address of the network data packet, and does not need to modify an IP header of the network data packet. In this way, decoupling between the secure tunnel and the sandbox network protection isolation is implemented while network security is ensured.

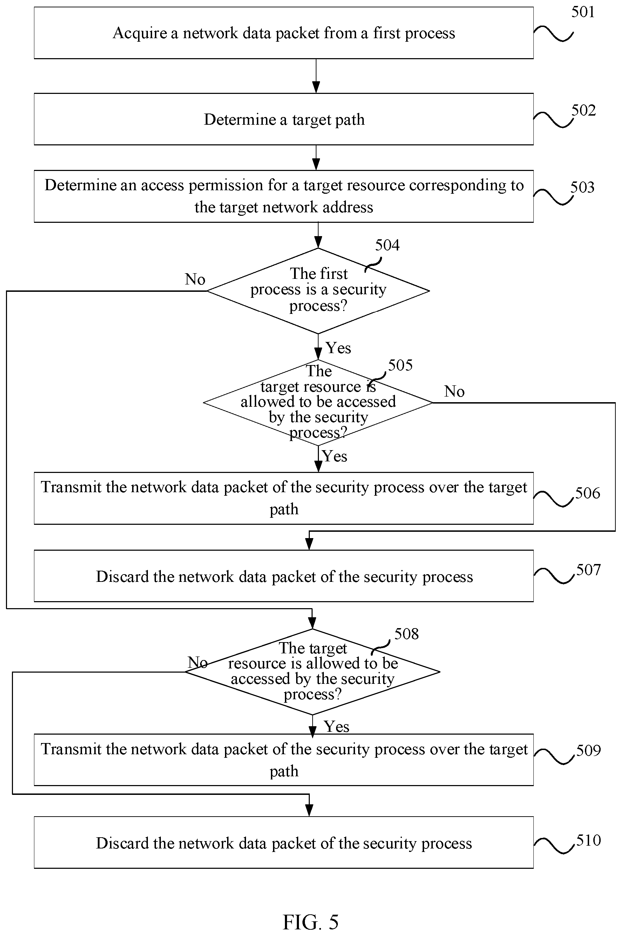

FIG. 5 is another flow chart of a data packet processing method according to some embodiments of the present disclosure. The method begins at block 501.

At block 501, a network data packet from a first process is acquired.

At block 502, a target path is determined.

At block 503, an access permission for a target resource corresponding to the target network address is determined.

At block 504, whether the first process is a security process is determined. When the first process is a security process, the method proceeds to operations at block 505. When the first process is a non-security process, the method proceeds to operations at block 508.

In the embodiments of the present disclosure, each time the electronic device creates a process, the electronic device may assign a unique process identification (PID) to the process.

Referring to FIG. 4, the WFP network protection module is configured to determine whether a process is a security process according to the PID of the process. For example, the WFP network protection module is configured to transmit the PID to a process identification module in the sandbox, and the process identification module determines whether the first process is a security process and returns an identification result to the WFP network protection module. Still for example, the process is monitored through process callback. When a new process is started, that is, the first process is started, whether the first process is a security process or a non-security process is identified according to a predetermined rule.

At block 505, whether the target resource corresponding to the target network address is allowed to be accessed by the security process is determined according to the access permission. If the target resource is allowed to be accessed by the security process, the method proceeds to operations at block 506. If the target resource is not allowed to be accessed by the security process, the method proceeds to operations at block 507.

Upon determining that the first process is a security process, the electronic device continues to determine whether the target resource corresponding to the target network address is allowed to be accessed by the security process. Only in the case that the target resource is allowed to be accessed by the security process, can the security process access the target resource, and can the TCP/IP stack transmit the network data packet.

At block 506, the network data packet from the security process is transmitted over the target path.

At block 507, the network data packet from the security process is discarded.

For example, when the target path is the first path, if the first process is a security process and the target resource is a resource allowed to be accessed by both a security process and a non-security process, the TCP/IP stack transmits the network data packet from the first process through the physical network interface card. In this case, the target resource is, for example, a read-only resource or the like.

Still for example, when the target path is the first path, if the first process is a security process and the target resource is a resource only allowed to be accessed by a non-security process, the TCP/IP stack discards the network data packet.

Still for example, when the target path is the second path, if the first process is a security process and the target resource is a resource only allowed to be accessed by a non-security process, the TCP/IP stack discards the network data packet.

Still for example, when the target path is the second path, if the first process is a security process and the target resource is a resource only allowed to be accessed by a security process, the TCP/IP stack transmits the network data packet from the first process by the virtual network interface card.

In addition, in some embodiments, it may be defaulted that the security process fails to access any resource other than the secure resource. Therefore, by default, the security process may not leak data over a network channel. However, the non-security process is not controlled, i.e., the on-security process can access the secure resource and non-secure resource. When a trustable secure network resource is configured for the security domain, the security process only allows to access to this network resource instead of other resources, which complies with the "minimum permission" principle. Since in the embodiments of the present disclosure, routing control is not directed to the process, once the secure tunnel is enabled, the non-security process is also capable of accessing the trustable secure network resource. Under pre-configuration that a secure network resource is accessible over a secure tunnel, to prevent a non-security process from accessing the secure network resource over the secure tunnel, if a security process requests to access the secure network resource, the security process is allowed to access the secure network resource, that is, the network data packet from the security process is transmitted over the target path. If the non-security process requests to access the secure network resource, the access is not allowed.

With this scheme, when the first process is a security process, according to the access permission and whether to transmit the network data packet of the security process through the target path being determined, decoupling between the secure tunnel and the sandbox network protection isolation is achieved while network protection is achieved.

At block 508, whether the target resource corresponding to the target network address is allowed to be accessed by the non-security process is determined according to the access permission. If the target resource is allowed to be accessed by the non-security process, the method proceeds to operations at block 509. If the target resource is not allowed to be accessed by the non-security process, the method proceeds to operations at block 510.

At block 509, the network data packet of the non-security process is transmitted over the target path.

At block 510, the network data packet of the non-security process is discarded.

For example, when the target path is the first path, if the first process is a non-security process and the target resource is a resource allowed to be accessed by both the security process and the non-security process, the TCP/IP stack transmits the network data packet of the first process through the physical network interface card.

Still for example, when the target path is the first path, if the first process is a non-security process and the target resource is a resource only allowed to be accessed by the non-security process, the TCP/IP stack transmits the network data packet of the non-security process over the first path.

Still for example, when the target path is the second path, if the first process is a non-security process and the target resource is a resource only allowed to be accessed by the security process, the TCP/IP stack discards the network data packet.

Still for example, when the target path is the second path, if the first process is a non-security process and the target resource is a resource allowed to be accessed by both the security process and the non-security process, the TCP/IP stack transmits the network data packet of the non-security process by the virtual network interface card. In this case, the target resource is, for example, a read-only memory or the like.

By adopting this scheme, when the first process is a non-security process, according to the access permission and whether to transmit the network data packet of the non-security process through the target path being determined, decoupling between the secure tunnel and the sandbox network protection isolation is achieved while network protection is achieved.

In some embodiments, prior to acquiring the network data packet from the first process, the electronic device is further configured to acquire a first configuration file and a second configuration file. The first configuration file is indicative of the correspondence relationship between the network addresses and the target paths of the resources. The second configuration file is indicative of an access permission for each resource. The access permission for the resource is used for indicating that the resource is only allowed to be accessed by the security process, the resource is only allowed to be accessed by the non-security process, or the resource is only allowed to be accessed by the security process and the non-security process.

Exemplarily, the electronic device pre-acquires the first configuration file from a local or remote server, and then performs registration in a system routing table, such that the routing table stores the correspondence relationship between the network addresses and the target paths of the resources. Likewise, the electronic device pre-acquires the second configuration file from the local or remote server, and stores the second configuration file in the TCP/IP stack. In this way, when the first process transmits the network data packet, the electronic device may determine, by querying the first configuration file, the target path and the access permission of the target source quickly and more accurately.

In some embodiments, the personal domain and the plurality of security domains may be defined on the same electronic device by the virtual isolation technology. The plurality of security domains means that there are a plurality of floating windows on the desktop of the personal domain in FIG. 1, and different floating windows represent different security domains. In some embodiments, non-security processes in the personal domain are allowed to communicate with each other, and security processes in a same security domain are allowed to communicate with each other, such that the security processes created in the same security domain are not restricted by the network, and thus the network between the security processes in the security domain is normal. In some embodiments, the non-security processes and the security processes are not allowed to communicate with each other, and the security processes in different security domains are not allowed to communicate with each other. To achieve such effects, the electronic device records the PID of a running process, the protocol used, a port monitored by the process, and the like, and filters an inbound request initiated by a non-security process to connect to a security process, and filters an outbound request initiated by a security process to connect to a non-security process using the WFP technology. The outbound request includes a local loopback request. In some embodiments, the electronic device processes the DNS request using the WFP technology.

In some embodiments, from the perspective of the first process, when the first process requests to establish a connection with the second process, a request initiated by the first process is referred to as an outbound request. In this case, the first process is deemed as a source process, and the second process is deemed as a target process. In an outbound scenario, a local loopback means that the first process requests to establish a connection with a local second process, and a non-local loopback means that the first process requests to establish a network connection to a remote process.

In some embodiments, when the first process is a non-security process and the first process initiates an outbound request of the local loopback, the second process is determined from local processes. In this case, when the second process is a non-security process, a connection between the first process and the second process is established, or when the second process is a security process, a connection between the first process and the second process is not allowed.

Exemplarily, the electronic device records a correspondence relationship between ports monitored by each of local processes, the protocols used by each process, and the PID of each process using the WFP technology. Therefore, when the first process initiates the outbound request of the local loopback, the electronic device can determine a PID of the second process according to the protocol and the PID, that is, the second process is determined from the local processes. Afterwards, the electronic device determines, using the WFP network protection module in FIG. 4, whether the second process is a security process. Since the first process is a non-security process, when the second process is a non-security process, the electronic device establishes a connection between the first process and the second process, such that the network connection between the non-security processes in the personal domain is normal. When the second process is a security process, the connection between the first process and the second process is not allowed, such that data leakage is avoided, and security of network protection is ensured.

In some embodiments, when the first process is a non-security process and the first process initiates an outbound request of a non-local loopback, whether an outbound resource corresponding to the outbound request is allowed to be accessed by the non-security process is determined. When the outbound resource is allowed to be accessed by the non-security process, a connection between the first process and the outbound resource is established. Alternatively, when the outbound resource is not allowed to be accessed by the non-security process, a connection between the first process and the outbound resource is not allowed.

Exemplarily, when the outbound request is an outbound request of the non-local loopback, since the target process is created on a remote device, the electronic device fails to determine the second process. In this case, since the outbound request carries indication information indicating an outbound resource, that is, a resource which the first process requests to access, the electronic device determines whether the outbound resource corresponding to the outbound request is allowed to be accessed by a non-security process. When the outbound resource is allowed to be accessed by a non-security process, a connection is established between the first process and the outbound resource, such that the first process can successfully access the outbound resource. When the outbound resource is not allowed to be accessed by a non-security process, a connection is prohibited between the first process and the outbound resource, such that data leakage is prevented.

Using this scheme, when the first process is a non-security process and the first process initiates an outbound request, the request is processed according to whether the outbound request is a local loopback request, such that data leakage is prevented while communication between the non-security processes in the personal domain is ensured.

In some embodiments, when the first process is a security process and the first process initiates an outbound request of the local loopback, a second process is determined from local processes. When the second process is a security process, a connection between the first process and the second process is established. When the second process is a non-security process, a connection is prohibited between the first process and the second process.

Exemplarily, the electronic device records a correspondence relationship between ports monitored by each of the local processes, the protocols used by each process, and the PIDs of each process using the WFP technology. Therefore, when the first process initiates the outbound request of the local loopback, the electronic device is capable of back-deriving the PID of the second process according to the protocol and the PID. Afterwards, the electronic device determines, using the WFP network protection module in FIG. 4, whether the second process is a security process. Since the first process is a security process, when the second process is a security process, the electronic device establishes a connection between the first process and the second process, such that the network between the security processes in the security domain can be ensured. When the second process is a non-security process, a connection is prohibited between the first process and the second process, such that data leakage is prevented, and security of network protection is ensured.

In some embodiments, when the first process is a security process and the first process initiates an outbound request of a non-local loopback, whether an outbound resource corresponding to the outbound request is allowed to be accessed by the security process is determined. When the outbound resource is allowed to be accessed by the security process, a connection between the first process and the outbound resource is established. Alternatively, when the outbound resource is not allowed to be accessed by the security process, a connection between the first process and the outbound resource is not allowed to be established.

Exemplarily, when the outbound request is an outbound request of the non-local loopback, since the target process is created on a remote device, the electronic device fails to determine the second process. In this case, since the outbound request carries indication information indicating an outbound resource, that is, a resource which the first process requests to access. The electronic device determines whether the outbound resource corresponding to the outbound request is allowed to be accessed by a security process. When the outbound resource is allowed to be accessed by the security process, a connection is established between the first process and the outbound resource, such that the first process is capable of successfully accessing the outbound resource. When the outbound resource is not allowed to be accessed by a security process, a connection is prohibited between the first process and the outbound resource, such that data leakage is prevented.

Using this scheme, when the first process is a security process and the first process initiates an outbound request, the request is processed according to whether the outbound request is a local loopback request, such that data leakage is prevented while communication between the security processes in the security domain is ensured.

The foregoing describes scenarios where the first process requests outbound, and hereinafter scenarios where the first process requests inbound are described in detail.

In some embodiments, from the perspective of the first process, when a third process requests to establish a connection with the first process, a request received by the first process is referred to as an inbound request. In this case, the first process is a target process, and the third process is a source process. In an inbound scenario, a local loopback means that a local third process requests to establish a connection with the first process, and a non-local loopback means that a remote third process requests to establish a connection with the first process.

In some embodiments, when the first process is a security process and an inbound request received by the first process is an inbound request of the local loopback, that is, the third process is a local process, the electronic device determines whether the third process is a security process. When the third process is a security process, a network connection is established between the first process and the third process. If the third process is a non-security process, a network connection between the first process and the third process is not allowed to be established.

When the first process is a non-security process and receives an inbound request of the local loopback, that is, the third process is a local process, the electronic device determines whether the third process is a security process. When the third process is a non-security process, a connection is established between the first process and the third process. When the third process is a security process, a connection is prohibited between the first process and the third process.

It shall be understandable that the first process receiving the inbound request from the local third process means that the local third process requests to establish a network connection with the first process, i.e., the third process requests outbound. The outbound scenario of the local loopback of the first process has been described hereinafter. Herein the inbound of the local loopback of the first process may be understood as the outbound of the local loopback of the third process. For details, reference may be made to outbound process of the local loopback of the first process.

When the first process is a non-security process and receives an inbound request of the non-local loopback, since the first process is a non-security process, a network connection may be established between the first process and the third process.

When the first process is a security process and receives an inbound request of the non-local loopback, that is, the third process is a remote process, the inbound request is prohibited, such that attacks from external malicious networks are prevented and the security domain is protected from being damaged while data leakage over network is prevented. When an accessible network resource is configured for the security domain, if the third process is a process corresponding to the accessible network resource, the third process is allowed to establish a connection with the first process. In addition, if security requirements on the security domain are relatively higher, all the inbound requests of the non-local loopback are blocked.

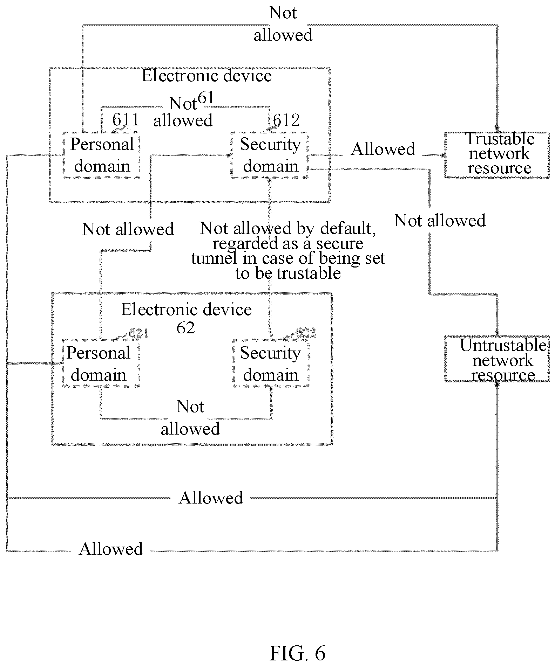

FIG. 6 is a schematic diagram of communication between processes involved in the data processing method according to some embodiments of the present disclosure. Referring to FIG. 6, a personal domain 611 and a security domain 612 are defined in the electronic device 61, and a personal domain 621 and a security domain 622 are defined in an electronic device 62.

Referring to FIG. 6, in some embodiments, a non-security process in the personal domain 611 is not allowed to connect to a security process in the security domain 612. The non-security process in the personal domain 611 is not allowed to access a trustable network resource, and a non-security process in the personal domain 611 is allowed to access an untrustable network resource. By default, a security process in the security domain 622 is not allowed to connect to a security process in the personal domain 612. When the trustable network resource configured for the security domain 622 includes the security domain 612, the security process in the security domain 622 is allowed to connect to a security process in the security domain 612.

It is to be noted that in FIG. 6, by default, the non-security process in the personal domain 611 is not allowed to access the trustable network resource, and a security process in the security domain 612 is not allowed to access the untrustable network resource. However, it is possible that by configuration in the first configuration file and the second configuration file, the non-security process in the personal domain 611 is allowed to access the trustable network resource, and the security process in the security domain 612 is allowed to access the untrustable network resource. In this case, the untrustable network resource is, for example, a read-only and unwritable resource, such that data leakage is at least avoided.

In some embodiments, prior to determining the first path or the second path as the target path according to the target network address of the network data packet, the electronic device further constructs a DNS request using the first process. Thereafter, the electronic device transmits the DNS request to a local proxy process such that the proxy process parses the DNS request.

Exemplarily, in the WFP technology, a connect event does not support domain name identification. The connection event refers to an event that the electronic device connects to a server corresponding to a target resource. The target resource is generally in a domain name format. The electronic device needs to transmit a DNS request to a DNS server to obtain an IP address corresponding to the domain name, that is, the target network address. However, the DNS server is generally an untrustable network server, and consequently, the DNS request fails. In addition, there is also a risk that the DNS request is hijacked. To prevent the DNS request being hijacked, in the embodiments of the present disclosure, a proxy process is created in the electronic device, and the proxy process processes all the DNS requests.

In some embodiments, when the first process is a security process, the electronic device determines, by using the proxy process, whether the target resource corresponding to a domain name carried in the DNS request is a resource accessible to the security process. When the target resource corresponding to the domain name is the resource accessible to the security process, a response packet corresponding to the DNS request is transmitted over UDP port 53. When the target resource corresponding to the domain name is inaccessible to a security process, the response packet is not allowed to be transmitted over UDP port 53.

In some embodiments, to enable normal parsing of the DNS request from the security process, if all the outbound requests are transmitted over the UDP port 53, that is, all the response packets are transmitted over the UDP port 53, security risks may be caused. For example, a security process in the security domain falsifies sensitive data to an DNS response packet, and transmits the DNS response packet over the UDP port 53, which consequently causes data leakage. To avoid such data leakage, when the first process is a security process, the first process constructs a DNS request carrying the domain name of the target resource. The DNS request is parsed by the local proxy process, such that a response packet is obtained. The response packet carries an IP address corresponding to the domain name, that is, the target network address. Thereafter, the proxy process determines whether the target resource is accessible by the security process. Only in the case that the target resource is accessible by the security process, does the proxy process transmit, over UDP port 53, a response packet obtained by parsing the DNS request. When the target resource is inaccessible by the security process, the response packet is not allowed to be transmitted over UDP port 53. In this way, it is only allowed to query DNS information of a specific secure network resource, and the other information is considered as a packet with a potential of leaking data and thus intercepted, to avoid data leakage, and improve network security.

When the first process is a non-security process, the first process constructs a DNS request carrying the domain name of the target resource. The DNS request is parsed by the local proxy process, such that a response packet is obtained. The response packet carries an IP address corresponding to the domain name, that is, the target network address. Thereafter, the proxy process transmits the response packet over the UDP port 53.

In some embodiments, when the target resource corresponding to the domain name is accessible by a security process, after the proxy process of the electronic device transmits the response packet corresponding to the DNS request over the UDP port 53, the electronic device further parses out a mapping relationship between the domain name and the target network address from the response packet, and stores the mapping relationship.

In some embodiments, the electronic device parses each of all the response packets transmitted over the UDP port 53 in the WFP to derive the mapping relationship between each domain name and a corresponding network address, and stores the mapping relationship. As such, when subsequent connect events occur, whether to restrict the domain name corresponding to the network address can be automatically determined, and thus a response speed is improved.

The following describes apparatus embodiments of the present disclosure, and the apparatuses in the embodiments hereinafter may be used for performed the method described in foregoing embodiments. For details that are not disclosed in the apparatus embodiments, reference may be made to the method embodiments.

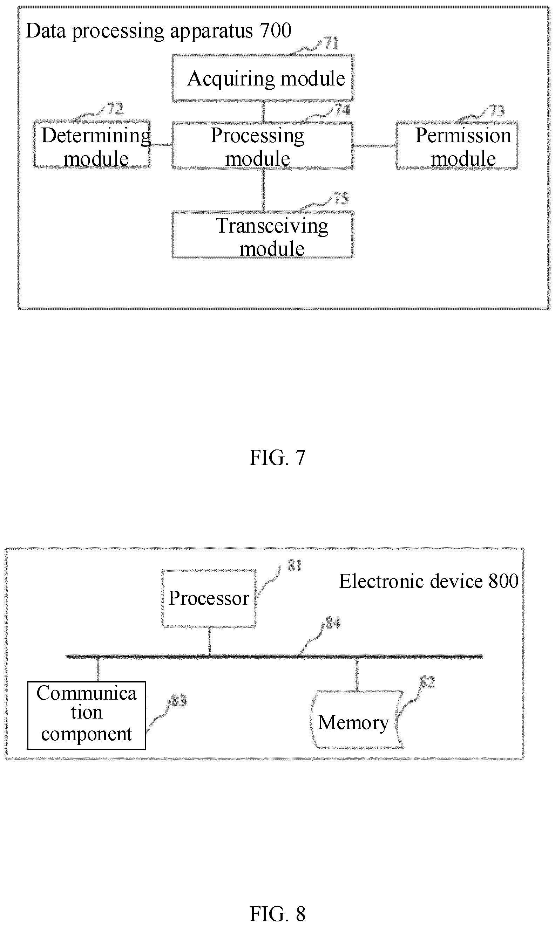

FIG. 7 is a schematic diagram of a data processing apparatus 700 according to some embodiments of the present disclosure. The data processing apparatus 700 includes: an acquiring module 71, a determining module 72, a permission module 73, and a processing module 74. In some embodiments, the data processing apparatus 700 further includes a transceiving module 75.

The acquiring module 71 is configured to acquire a network data packet from a first process.

The determining module 72 is configured to determine the first path or the second path as the target path according to a target network address of the network data packet, where the first path is a path passing through a physical network interface card, and the second path is directed to a predetermined secure tunnel.

The permission module 73 is configured to determine an access permission for a target resource corresponding to the target network address.

The processing module 74 is configured to process the network data packet according to the target path and the access permission.

In some embodiments, the processing module 74 is configured to determine whether the first process is a security process, and determine, in response to the first process being a security process, according to the access permission, whether the target resource corresponding to the target network address is allowed to be accessed by the security process.

The transceiving module 75 is configured to transmit the network data packet over the target path when the target resource is allowed to be accessed by the security process.

The processing module 74 is further configured to discard the network data packet when the target source is not allowed to be accessed by the security process.

In some embodiments, the processing module 74 is configured to determine, according to the access permission, whether the target resource corresponding to the target network address is allowed to be accessed by the non-security process, when the first process is a non-security process.

The transceiving module 75 is configured to transmit the network data packet over the target path when the target resource is allowed to be accessed by the non-security process.

The processing module 74 is further configured to discard the network data packet when the target source is not allowed to be accessed by the security process.

In some embodiments, prior to acquiring the network data packet from the first process, the acquiring module 71 is further configured to acquire a first configuration file and a second configuration file. The first configuration file is indicative of a correspondence relationship between network addresses and target paths of resources. The second configuration file is indicative of an access permission for each respective resource of the resources. The access permission for the respective resource is used for indicating that the resource is only allowed to be accessed by the security process, the respective resource is only allowed to be accessed by the non-security process, or the respective resource is only allowed to be accessed by the security process and the non-security process.

In some embodiments, the processing module 74 is further configured to: determine a second process from local processes when the first process is a non-security process and initiates an outbound request of a local loopback; and establish a connection between the first process and the second process when the second process is a non-security process, or does not establish the connection between the first process and the second process when the second process is a security process. The processing module 74 is further configured to: determine whether an outbound resource corresponding to the outbound request is allowed to be accessed by a non-security process when the first process is a non-security process and initiates an outbound request of a non-local loopback; and establish a connection between the first process and the outbound resource when the outbound resource is allowed to be accessed by a non-security process, or does not establish a connection between the first process and the outbound resource when the outbound resource is not allowed to be accessed by a non-security process.

In some embodiments, the processing module 74 is further configured to: determine a second process from local processes when the first process is a security process and initiates an outbound request of a local loopback; and establish a connection between the first process and the second process when the second process is a security process, or does not establish a connection between the first process and the second process when the second process is a non-security process. The processing module 74 is further configured to determine, when the first process is a security process and initiates an outbound request of a non-local loopback, whether an outbound resource corresponding to the outbound request is allowed to be accessed by a security process; and establish a connection between the first process and the outbound resource when the outbound resource is allowed to be accessed by the security process, or does not establish a connection between the first process and the outbound resource when the outbound resource is not allowed to be accessed by a security process.

In some embodiments, the processing module 74 is further configured to, when the first process is a security process and receives an inbound request of a non-local loopback, ignore the inbound request.

In some embodiments, the processing module 74 is further configured to, prior to determining the first path or the second path as the target path according to the target network address of the network data packet, construct a DNS request using the first process.

In some embodiments, the transceiving module 75 is configured to transmit the DNS request to a local proxy process such that the proxy process parses the DNS request.

In some embodiments, the processing module 74 is further configured to: determine, when the first process is a security process, whether the target resource corresponding to a domain name carried in the DNS request is accessible by the security process, after the transceiving module 75 transmits the DNS request to the local proxy process such that the local proxy process parses the DNS request.

In some embodiments, the transceiving module 75 is further configured to transmit, when the target resource corresponding to the domain name is accessible by the security process, a response packet corresponding to the DNS request over UDP port 53.

In some embodiments, the processing module 74 is further configured to skip, when the target resource corresponding to the domain name is inaccessible by the security process, transmitting the response packet corresponding to the DNS request over the UDP port 53.

In some embodiments, the processing module 74 is further configured to, parse out a mapping relationship between the domain name and the target network address from the response packet, and store the mapping relationship, after the transceiving module 75 transmits the response packet over the UDP port 53.

The data processing apparatus according to the embodiments of the present disclosure is capable of performing any of operations of the electronic device in the above embodiments. The apparatus observes the same principles and achieves the same technical effects, which are not described herein any further.

FIG. 8 is a schematic structural diagram of an electronic device according to some embodiments of the present disclosure. As illustrated in FIG. 8, the electronic device 800 includes: a processor 81 and a memory 82.

The memory 82 stores one or more computer instructions.

The processor 81, when loading and executing the one or more computer instructions stored in the memory 82, is caused to perform the data processing method as described in the method embodiments.

For specific implementation of the method by the processor 81, reference may be made to the above method embodiments. The electronic device observes the same principles and achieves the same technical effects, which are not described herein any further.

In some embodiments, the electronic device 800 further includes a communication component 83. The processor 81, the memory 82, and the communication component 83 may be connected via a bus 88.

Some embodiments of the present disclosure further provide a non-transitory computer-readable storage medium. The computer-readable storage medium stores one or more computer instructions. The one or more computer instructions, when loaded and executed by a processor, cause the processor to perform the data processing method according to any of the above embodiments.

Some embodiments of the present disclosure further provide a computer program product. The computer program product stores one or more computer programs. The one or more computer programs, when loaded and executed by a processor, cause the processor to perform the data processing method according to any of the above embodiments.

Other embodiments of the present disclosure will be apparent to those skilled in the art from consideration of the specification and practice disclosed herein. The present disclosure is intended to cover any variations, uses, or adaptations of the present disclosure following the general principles thereof and including such departures from the present disclosure as coming within common knowledge or customary technical means in the art. It is intended that the specification and examples be considered as exemplary only, and the spirit and scope of the present disclosure is subject to the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A data processing method, comprising:
acquiring a network data packet from a first process;
determining a first path or a second path as a target path according to a target network address of the network data packet, wherein the first path is a path passing through a physical network interface card, and the second path is directed to a predetermined secure tunnel;
determining an access permission for a target resource corresponding to the target network address; and
processing the network data packet according to the target path and the access permission.

2. The method according to claim 1, wherein processing the network data packet according to the target path and the access permission comprises:
determining whether the first process is a security process;
determining, according to the access permission, whether the target resource corresponding to the target network address is allowed to be accessed by the security process, in response to the first process being a security process;
transmitting the network data packet over the target path in response to the target resource being allowed to be accessed by the security process; and
discarding the network data packet in response to the target source being not allowed to be accessed by the security process.

3. The method according to claim 1 or 2, further comprising:
determining, according to the access permission, whether the target resource corresponding to the target network address is allowed to be accessed by the non-security process in response to the first process being a non-security process;
transmitting the network data packet over the target path in response to the target resource being allowed to be accessed by the non-security process; and
discarding the network data packet in response to the target source being not allowed to be accessed by the non-security process.

4. The method according to any of claims 1 to 3, wherein the method further comprises prior to acquiring the network data packet from the first process:
acquiring a first configuration file and a second configuration file, wherein the first configuration file is indicative of a correspondence relationship between network addresses and target paths of resources, the second configuration file is indicative of an access permission for each respective resource of the resources, and the access permission for the respective resource is used for indicating that the resource is only allowed to be accessed by the security process, the respective resource is only allowed to be accessed by the non-security process, or the respective resource is only allowed to be accessed by the security process and the non-security process.

5. The method according to any of claims 1 to 4, further comprising:
determining a second process from local processes in response to the first process being a non-security process and an outbound request of a local loopback being initiated by the first process, and establishing a connection between the first process and the second process in response to the second process being a non-security process, or skipping establishing the connection between the first process and the second process in response to the second process is a security process; or
determining, in response to the first process being a non-security process and an outbound request of a non-local loopback being initiated by the first process, whether an outbound resource corresponding to the outbound request is allowed to be accessed by the non-security process, and establishing a connection between the first process and the outbound resource in response to the outbound resource allows access by the non-security process, or skipping establishing the connection between the first process and the outbound resource in response to the outbound resource being not allowed to be accessed by the non-security process.

6. The method according to any of claims 1 to 4, further comprising:
determining a second process from local processes in response to the first process being a security process and an outbound request of a local loopback being initiated by the first process, and establishing a connection between the first process and the second process in response to the second process being a security process, or skipping establishing the connection between the first process and the second process in response to the second process being a non-security process; or
determining, in response to the first process being a security process and an outbound request of a non-local loopback being initiated by the first process, whether an outbound resource corresponding to the outbound request is allowed to be accessed by the security process, and establishing a connection between the first process and the outbound resource in response to the outbound resource being allowed to be accessed by the security process, or skipping establishing the connection between the first process and the outbound resource in response to the outbound resource being not allowed to be accessed by the security process.

7. The method according to any of claims 1 to 6, further comprising:
in response to the first process being a security process and an inbound request of a non-local loopback being received by the first process, ignoring the inbound request.

8. The method according to any of claims 1 to 7, wherein the method further comprises:
prior to determining the first path or the second path as the target path according to the target network address of the network data packet,
constructing a domain name system (DNS) request using the first process; and
transmitting the DNS request to a local proxy process such that the proxy process parses the DNS request.

9. The method according to claim 8, wherein the method further comprises:
after transmitting the DNS request to the local proxy process such that the proxy process parses the DNS request,
determining, in response to the first process being a security process, whether the target resource corresponding to a domain name carried in the DNS request is allowed to be accessed by the security process;
transmitting a response packet corresponding to the DNS request over UDP port 53 in response to the target resource corresponding to the domain name being allowed to be accessed by the security process; and
prohibiting transmitting a response packet over the UDP port 53 in response to the target resource corresponding to the domain name being not allowed to be accessed by the security process.

10. The method according to claim 9, wherein the method further comprises:
after transmitting the response packet corresponding to the DNS request over the UDP port 53 in response to the target resource corresponding to the domain name being allowed to be accessed by the security process,
parsing out a mapping relationship between the domain name and the target network address from the response packet; and
caching the mapping relationship.

11. An electronic device, comprising: a processor, a memory, and one or more computer programs that are stored in the memory and executable on the processor; wherein the one or more computer programs, when loaded and executed by the processor, cause the electronic device to perform the method of any of claims 1 to 10.

12. A non-transitory computer-readable storage medium, storing one or more computer programs thereon; wherein the one or more computer programs, when loaded and executed by a processor, cause the processor to perform the method of any of claims 1 to 10.
